# EUROPEAN PATENT APPLICATION

(11) **EP 4 080 436 A1**
(43) Date of publication of application: **26.10.2022**
(21) Application number: 22178221.2
(22) Date of filing: 28.08.2009
(51) Int. Cl.: G06Q 20/00, G07F 7/08

(54) **MOBILE PERSONAL POINT-OF-SALE TERMINAL AND METHOD FOR COMMUNICATING ENCRYPTED TRANSACTION INFORMATION**

(30) Priority: 31.08.2008 US 231379
(62) Divisional of application: 09810380.7
(71) Applicant: Maxim Integrated Products, Inc., San Jose, CA 95134 (US)
(72) Inventor: Leyden Li, Michelle, El Dorado Hills, CA, 95762 (US); Pope, Steven M., Los Gatos, CA, 95032 (US); Aceves, Manuel, Sunnyvale, CA, 94085 (US)
(74) Representative: Canzler & Bergmeier Patentanwälte Partnerschaft mbB

(57) **Abstract**

A customer mobile personal point-of-sale terminal comprising:
a cellular telephone;
a point-of-sale sleeve coupled to the cellular telephone, the point-of-sale sleeve comprising:
a magnetic stripe reader that loads a customer account number from a swiped credit card by a customer;
a secure memory that stores a cryptographic key unique to the customer;
a battery that provides power to the secure memory;
a secure POS terminal integrated circuit that is supplied with the customer account number that was loaded into the magnetic stripe reader, the secure POS terminal uses the cryptographic key to encrypt the customer account information, a merchant account number and a merchant identification information;
a connector that detachably mates with the cellular telephone;
wherein the encrypted customer account information, the encrypted merchant account information, the encrypted merchant identification information and the transaction information are transmitted to a financial transaction verification entity for approval of a transaction.

## Description

### TECHNICAL FIELD

The described embodiments relate to mobile POS terminals and related methods.

### BACKGROUND INFORMATION

Financial transactions are often made using secure electronic devices called point-of-sale (POS) terminals. In one type of common transaction, a customer wishes to make a purchase from a merchant. The customer presents a magnetic card (for example, a credit card) to the merchant. The merchant swipes the magnetic card through a magnetic card reader of the POS terminal. The magnetic card reader reads an account number from the card. The POS terminal then communicates information about the transaction and the account number to a financial verification entity or entities. The POS terminal uses encryption keys to communicate with the financial verification entity so that the customer's account number is communicated in a secure fashion. Depending on the type of transaction, there may be several secure communications back and forth between the POS terminal and the financial verification entity. The customer may, for example, at some point in the process enter a user password into the POS terminal so that the identity of the customer can be confirmed. The customer may, for example, enter a signature into the POS terminal to authorize the transaction.

It is desired to keep sensitive information of such a transaction out of the hands of thieves. If the sensitive information (such as the encryption keys used, the customer's account number, the user password, and/or evidence of the customer's signature) were to fall into the hands of a thief, the thief may be able to use the information to make unauthorized purchases or otherwise to steal money from the customer and/or merchant and/or financial institution. Significant anti-tamper circuitry and technology is therefore incorporated into the POS terminals to prevent thieves from obtaining sensitive information that might be present in the POS terminal. Unfortunately, thieves have over time become more and more ingenious and resourceful in their attempts to extract such sensitive information from POS terminals. The manufacturers of POS terminals have therefore had to, and continue to seek to, improve the anti-tamper security features and capabilities of POS terminals.

POS terminals such as the ones described above are often located in a store or other retail establishment. The customer typically travels to the store or retail establishment. If the customer decides to make a purchase, then the customer and merchant use a POS terminal that is generally hardwired at the point-of-sale location to a telephone line or hardwired network. The communications between the POS terminal and the financial verification entity described above take place across this hardwired link.

There are, however, mobile wireless POS terminals. A merchant using such a POS terminal can engage customers at locations outside the store or retail establishment. A merchant may also engage a customer for checkout at a location in the store other than at the confined exit checkout area. At times when many customers are waiting in long checkout lines, providing a merchant an ability to checkout customers standing in line using a mobile wireless POS terminal is often desirable. Mobile wireless POS terminals are also useful for merchants who sell products at outdoor locations. For example, a merchant at a farmer's market or on a boardwalk may find a mobile wireless POS terminal useful because in such outdoor locations there may be no hardwired landlines available for communication with the financial verification entity or entities.

Mobile wireless POS terminals are generally-complete and dedicated POS terminal devices that include a wireless communication capability, a display, a card reader, and other input/output capabilities seen on ordinary POS terminals. These wireless devices may communicate with a central unit that in turn communicates with the financial verification entity. The hardware of the mobile wireless POS terminal is generally dedicated for use in the POS terminal function. The hardware is typically not designed to have general purpose functions other than the POS terminal function. The overall POS terminal system is therefore generally fairly expensive. A less expensive alternative is sought. A small merchant who sells products at a farmer's market, for example, may not wish to spend a large amount of money to buy and operate a sophisticated mobile wireless POS terminal system.

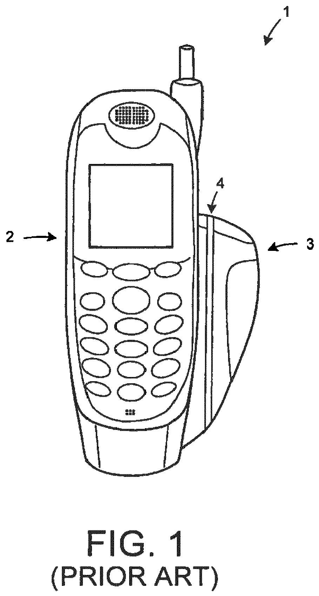

Figure 1 (Prior Art) is an illustration of a less expensive mobile wireless POS terminal 1. POS terminal 1 includes a cellular telephone 2 that is mass produced for general cellular telephone use. POS terminal 1 also includes a POS terminal attachment 3 that engages, and fits onto, cellular telephone 2. A merchant, such as a merchant selling products in a public park, might carry such a POS terminal 1. If a sale is to be made, then a customer's credit card may be swiped through the card reader slot 4. A magnetic card stripe reader of attachment 3 reads information from the magnetic card. This information is then encrypted by secure circuitry within attachment 3 before communication to cellular telephone 2 for wireless communication from cellular telephone 2 to a financial verification entity. An example of such a mobile wireless POS terminal is a device called "PowerSwipe", formerly available from Virtual Fonlink Inc., previously doing business as Creditel. For additional information on mobile wireless POS terminal 1, see U.S. Patent No. 7,003,316 (the subject matter of which is incorporated herein by reference).

Unfortunately the prior art device of Figure 1 appears not to have been very well received. An improved mobile wireless POS terminal device is sought.

### SUMMARY

A customer mobile personal point-of-sale terminal (CMPPT) includes a Point-of-Sale (POS) sleeve portion that slidingly engages to, and slidably disengages from, a cellular telephone portion. When the POS sleeve portion is fully slidably engaged with the cellular telephone portion, a connector on the POS sleeve portion mates with a corresponding connector on the cellular telephone portion. Secure POS circuitry within the POS sleeve portion communicates through these mated connectors with the cellular telephone portion. The cellular telephone portion is a standard cellular telephone that is mass produced for general purpose cellular telephone use. The secure POS circuitry with the POS sleeve portion uses the cellular telephone portion to communicate encrypted information to and from a financial transaction verification entity (FTVE).

In some examples, the secure POS circuitry with the POS sleeve portion also uses keys on the cellular telephone portion to receive a Personal Identification Number (PIN), and/or other customer identification information, from a user of the CMPPT. When "banking" PIN information is received, secure protected hardware is provided all the way up to the keys. Additional hardware security features on the iPhone are advisable. The user password employed in other embodiments provides an additional layer of protection to the data entered through the cellular telephone portion, but does not provide the security normally provided to "banking" PIN information. When the POS sleeve portion is set up for the first time, the initial PIN or user password is locket to the serial number of the cellular telephone portion. The initial PIN and/or user password plus the serial number are then used to generate a unique ID used in subsequent operations.

The POS sleeve portion also includes a mechanism (for example, a magnetic stripe reader) for reading in a merchant account number at the point-of-sale into the POS sleeve portion. Rather than a customer entering sensitive financial information into a merchant's POS terminal (MPT) at the point-of-sale and having to trust the merchant with such sensitive information as is conventional, merchant information is entered into the customer's CMPPT. Throughout the transaction, the CMPPT remains in the possession of the customer. The merchant information entered into the customer's CMPPT may include information indicative of a merchant account into which the merchant is to receive funds as part of a transaction.

In one novel aspect, the CMPPT initiates a financial transaction by sending customer account information and merchant account information to the FTVE. The customer does not enter sensitive customer information (such as a customer account number) into an MPT. The FTVE receives information about the transaction (for example, the amount of the transaction) directly from the MPT. After receiving the merchant account information and the customer account information from the CMPPT, and after receiving the transaction information from the MPT, the FTVE verifies the transaction, and after authorization, the FTVE forwards approval codes to both the CMPPT and to the MPT.

In one example, encryption keys in the POS sleeve portion that are used to engage in secure communications with the FTVE are only for use by the individual customer in possession of the CMPPT. The encryption keys are only usable to communicate between the individual customer's CMPPT and the FTVE. If the CMPPT becomes lost or stolen, the keys within the CMPPT need not be erased. Rather, the FTVE is alerted and the FTVE no longer uses the keys to receive and encrypt and decrypt messages with CMPPTs, thereby effectively disabling the lost or stolen CMPPT.

Although a CMPPT can be used to initiate a transaction by first entering merchant account information into the CMPPT at the point-of-sale, it is to be understood that any necessary merchant account information needed to initiate the transaction can be communicated from the merchant to the FTVE without such information being entered into the CMPPT. Any way of sending the required customer, merchant and transaction information to the FTVE in a secure manner and associating the information there at the FTVE can be employed so long as the customer account information passes directly from the CMPPT to the FTVE and does not pass to the merchant or the merchant's POS terminal.

Further details and embodiments and techniques are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
**Figure** 1 (Prior Art) is a diagram of a prior art mobile POS terminal.
Figure 2 is a perspective exploded view of a customer mobile personal point-of-sale terminal (CMPPT) 10 in accordance with one novel aspect.
Figure 3 is a diagram that illustrates various steps in a financial transaction method carried out with the CMPPT 10 of Figure 2.
Figure 4 is a flowchart of the financial transaction method of Figure 3.

### DETAILED DESCRIPTION

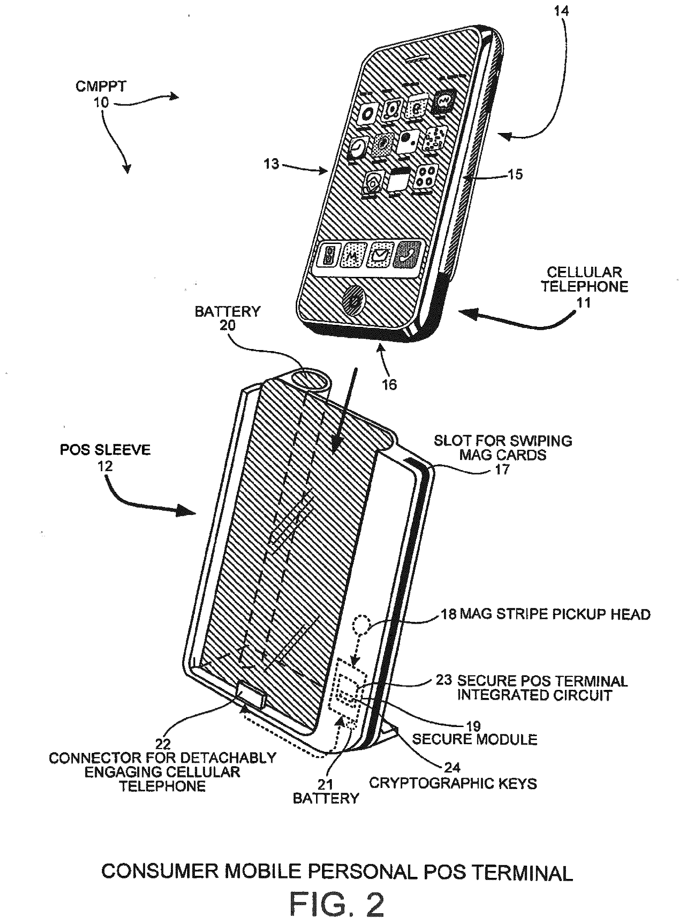

Figure 2 is a perspective exploded view of a customer mobile personal point-of-sale terminal (CMPPT) 10 in accordance with one novel aspect. The use of the term "customer" here indicates that this CMPPT device 10, in one novel method, is owned by and in the possession of an individual customer, as opposed to a merchant or other person. The use of the term "personal" here indicates that this CMPPT device 10 is personalized for the individual customer. In one example, CMPPT device 10 stores a personal encryption key(s) that is (are) used only for communication with the individual CMPPT of the individual customer. The personal encryption key(s) is (are) not used by any other customer owning a similar CMPPT device.

**CMPPT** 10 includes a cellular telephone 11 portion and a POS sleeve portion 12. Cellular telephone 11 may, for example, be a cellular telephone named the iPhone, available from Apple Computer, Inc. of Cupertino, California. POS sleeve portion 12 has a sliding surface that can slidingly engage to, and slidingly disengage from, cellular telephone 11. In the illustrated example, the sliding surface of POS sleeve 12 slidingly engages a substantial portion of a left side 13 of cellular telephone 11, a substantial portion of a back side 14 of cellular telephone 11, a substantial portion of a right side 15 of cellular telephone 11, and a substantial portion of a bottom side 16 of cellular telephone 11. The terms "left", "right", "back" and "bottom" are relative terms and refer to sides of cellular telephone 11 when considered from the viewing perspective of Figure 2. When cellular telephone 11 is slidingly engaged with POS sleeve 12, the front face of cellular telephone 11 is visible and is not covered by sleeve 10. The front face of the cellular telephone is the side of the cellular telephone that includes keys for interacting with the cellular telephone.

POS sleeve portion 12 includes a mechanism for reading merchant information into POS sleeve portion 12. In one example, this mechanism involves a slot 17 for swiping magnetic cards and a magnetic stripe pickup head
18. POS sleeve portion 12 also includes a secure module
19, a first battery 20, a second battery 21, and a connector 22. Connector 22 makes electrical contact with a corresponding mating connector (not shown) on cellular telephone portion 11 when the cellular telephone portion 11 is fully slid down into POS sleeve portion 12. Secure module 19 includes several components including an integrated circuit package (not shown), a secure POS terminal integrated circuit 23, and an anti-tamper security mesh (not shown). Cryptographic keys 24 used for secure communication are stored in a secure memory-portion of integrated circuit 23. The secure memory, which is a type of Static Random Access Memory (SRAM) in this example, is backed up and powered by second battery 21. Second battery 21 has a relatively small capacity as compared to first battery 20. Second battery is not used to power cellular telephone portion 11, but rather is dedicated to powering secure module 19 and its anti-tamper circuitry and its secure memory. For additional information on an example of a secure module 19 and secure POS terminal integrated circuit 23, see: 1) U.S. Patent Number 7,343,496, by Peter Hsiang et al., entitled "Secure Transaction Microcontroller With Secure Boot Loader", and 2) U.S. Patent Application Serial Number 11/786,871, entitled "Package-on-Package Secure Module Having Anti-Tamper Mesh In The Substrate Of The Upper Package", filed April 13, 2007, by Steven M. Pope et al. (the entire subject matter of these two documents is incorporated herein by reference).

In an embodiment in which cellular telephone 11 is an iPhone, a native application is downloaded from an "application store" to the iPhone and controls the interoperability of the iPhone and POS sleeve portion 12. For example, the native application transfers information to POS sleeve portion 12 that is input using the keypad functionality of the iPhone. Information entered through the keypad of the iPhone is transferred through connector 22 to POS sleeve portion 12. The native application also controls the wireless transmission of information entered into and/or processed by POS sleeve portion 12. In embodiments in which cellular telephone 11 is not an iPhone, the cell phone operating system itself includes the functionality for wirelessly transmitting information that is received from and output to POS sleeve portion 12.

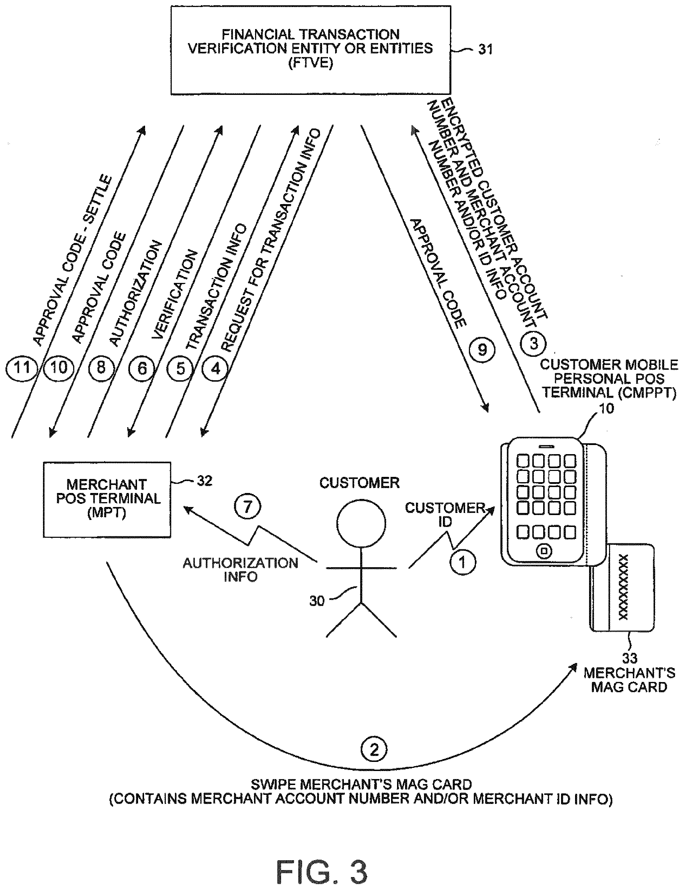

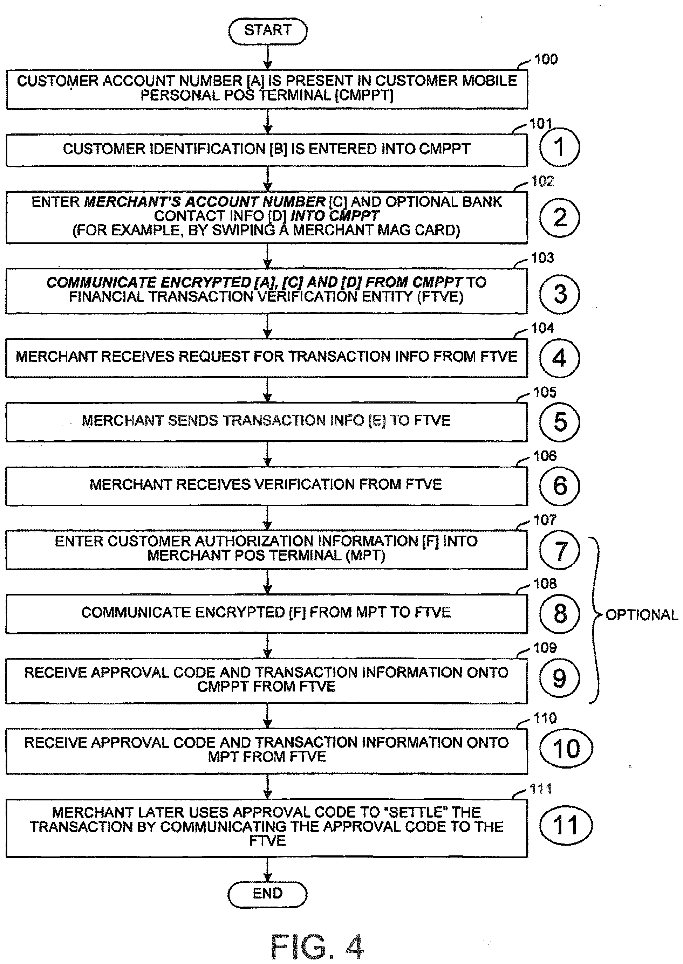

One example of an operation of CMPPT 10 is set forth below in connection with Figures 3 and 4. In this example, a customer 30 has possession of CMPPT 10. The cellular telephone 11 of the CMPPT 10 is of general utility and is used by customer 30 to engage in ordinary cellular telephone communications that do not involve POS transactions. Customer 30 has purchased sleeve 12 and has slidingly engaged cellular telephone portion 11 and POS sleeve portion 12 to form CMPPT 10. One or more of the cryptographic keys 24 stored in sleeve 12 are associated only with customer 30 and the customer's individual CMPPT 10, and are not associated with any-other individual or CMPPT. The keys are therefore "personal" to customer 30.

A financial transaction verification entity or entities (FTVE) 31 can communicate with other POS terminals and other CMPPTs using cryptographic keys that are different than the specific cryptographic keys 24 used to communicate with CMPPT 10. If customer 30 loses CMPPT 10 or if CMPPT 10 is stolen, then keys 24 stored in CMPPT 10 do not need to be erased to prevent a thief from making unauthorized transactions. Rather, FTVE 31 simply stops using the personal encryption keys associated with CMPPT 10, thereby effectively disabling CMPPT 10.

Initially, a customer account number [A] is present in CMPPT 10 (step 100). In one example, customer 30 has loaded the customer account number [A] into CMPPT 10 upon initially receiving CMPPT 10. Customer 30 loaded account number [A] by swiping a magnetic credit card bearing the customer's account number through slot 17. The magnetic stripe pickup head 18 supplies the customer's account number information to secure POS terminal integrated circuit 23. In this way, the customer may have loaded multiple different account numbers into CMPPT 10. Once loaded, customer 30 no longer needs to carry the credit cards if the customer carries CMPPT 10. The account numbers of the customer's accounts are stored in CMPPT 10.

Next, customer 30 in this example decides to make a purchase. The customer may be present along with the merchant in an outdoor environment, or may be present in a store operated by the merchant, or may be elsewhere. CMPPT 10 is, however, in the immediate custody and possession of customer 30.

To initiate a transaction, customer 30 enters (step 101) customer identification information [B] into CMPPT 10. In one example, customer identification information [B] is a user password. CMPPT 10 checks the customer identification information to verify that the person who entered the customer identification information is the authorized customer 30 (and owner of CMPPT 10) rather than a thief or imposter. The action of entering the customer identification information [B] is indicated in Figure 3 by the arrow identified by the encircled numeral "1". This encircled "1" numeral corresponds to step 101 in Figure 4 that is similarly-identified with the encircled "1" symbol.

Next, the merchant enters information into CMPPT 10 that identifies a merchant account. In one example, this information is a merchant account number [C] and merchant identification information [D]. This action is indicated in Figure 3 by the arrow identified by the encircled numeral "2". This encircled "2" numeral corresponds to step 102 in Figure 4 that is similarly identified with the encircled "2" symbol. In this example, the merchant has a magnetic card 33 that stores a merchant account number [C] as well as merchant identification information [D]. This merchant information [C] and [D] is entered into CMPPT 10 of the customer by swiping the merchant's magnetic card 33 through slot 17 of the customer's CMPPT 10. At no time does the customer provide the merchant with a customer credit account number or a customer credit card. Customer 30 need not swipe a magnetic card through a POS terminal maintained by the merchant in order to carry out the desired transaction.

Next, CMPPT 10 sends customer account number [A], merchant account number [C], and merchant identification information [D] to a FTVE 31. This action is indicated in Figure 3 by the arrow identified by the encircled numeral "3". This encircled "3" numeral corresponds to step 103 in Figure 4 that is similarly identified with the encircled "3" symbol. Secure POS terminal integrated circuit 23 uses the encryption keys 24 to encrypt this information and to engage in secure communications with FTVE 31. Cellular telephone portion 11 serves as a communication mechanism through which sleeve 12 and FTVE 31 communicate. Unencrypted sensitive financial information does not pass from POS sleeve portion 12 to cellular telephone portion 11, does not pass through cellular telephone portion 11, and is not stored in cellular telephone portion 11.

Next, FTVE 31 sends the merchant a request for information about the transaction. This action is indicated in Figure 3 by the arrow identified by the encircled numeral "4". This encircled "4" numeral corresponds to step 104 in Figure 4 that is similarly identified with the encircled "4" symbol. The customer's account number is not communicated to the merchant in this communication. In the illustrated example, the request for information is communicated in a secure manner to a merchant POS terminal (MPT) 32.

Next, the merchant responds to the request by-sending transaction information [E] back to FTVE 31. Transaction information [E] may include a transaction amount that is to be reserved for the merchant. This action is indicated in Figure 3 by the arrow identified by the encircled numeral "5". This encircled "5" numeral corresponds to step 105 in Figure 4 that is similarly-identified with the encircled "5" symbol. The transaction information is the same transaction information that is conventionally communicated in a conventional credit card verification operation from a merchant's POS terminal to the acquirer (merchant's bank) as the first communication of a credit card transaction. In the novel method of Figures 3 and 4, however, this transaction information is supplied by merchant's POS terminal 32, whereas the remainder of the information that is conventionally communicated from the merchant's POS terminal to FTVE 31 is instead communicated directly from CMPPT 10 to FTVE 31.

Next, FTVE 31 receives the transaction information, verifies the customer's account number, verifies the transaction amount, reserves the indicated transaction amount for the merchant, and sends a verification back to MPT 32. At this point, the reserved amount is usually not actually transferred from the customer's account to the merchant's account, but rather the transaction amount is reserved in the customer's account. The communication of the verification is indicated in Figure 3 by the arrow identified by the encircled numeral "6". This encircled "6" numeral corresponds to step 106 in Figure 4 that is similarly identified with the encircled "6" symbol.

Next, customer 30 authorizes (step 107) the transaction. In one example of Figure 3, customer 30 authorizes the transaction by entering authorization information [F] into MPT 32 by signing a signature capture pad portion of MPT 32. In another example, rather than customer 30 authorizing the transaction by-entering authorization information [F] into MPT 32, the authorization information [F] is entered into CMPPT 10 and is communicated from CMPPT 10 to FTVE 31.

Next, in the example of Figure 3, the authorization information [F] is communicated (step 108) in encrypted form from MPT 32 to FTVE 31. The sending of authorization information [F] to FTVE 31 is indicated in Figure 3 by the arrow identified by the encircled numeral "8". This encircled "8" numeral corresponds to step 108 in Figure 4 that is similarly identified with the encircled "8" symbol.

Next, FTVE 31 sends an approval code to CMPPT 10 and also sends the approval code to MPT 32. The sending of the approval code to CMPPT 10 is indicated in Figure 3 by the arrow identified by the encircled numeral "9". This encircled "9" numeral corresponds to step 109 in Figure 4 that is similarly identified with the encircled "9" symbol. The sending of the approval code to MPT 32 is indicated in Figure 3 by the arrow identified by the encircled numeral "10". This encircled "10" numeral corresponds to step 110 in Figure 4 that is similarly identified with the encircled "10" symbol.

At this point, both the customer's CMPPT 10 and the merchant's MPT 32 have received the approval code. In addition to the approval code, FTVE 31 can send CMPPT 10 other information about the transaction such as the items purchased, item prices, transaction time, transaction date, merchant's name, and merchant's address. This transaction information can be logged in either cellular telephone portion 10 and/or POS sleeve portion 12 for future use. At this point in the transaction, customer 30 generally receives merchandise and the customer and merchant have no more interaction in setting up the transaction.

Later, typically at the end of the business day, the merchant's MPT 32 sends (step 111) the approval code for the authorized transaction in a group along with the approval codes for other authorized transactions to FTVE 31 for settlement. Settlement involves the transfer of funds from the customer's account to the merchant's account.

In one example, the encryption keys 24 that are used to engage in secure communications with FTVE 31 are only for use by the individual customer in possession of the CMPPT 10. The encryption keys are only usable to communicate between one particular CMPPT and the FTVE. If the customer's CMPPT 10 becomes lost or stolen, then the keys 24 within CMPPT 10 need not be erased. Rather, FTVE 31 is alerted and the FTVE no longer uses the keys to receive and encrypt and decrypt messages with CMPPTs, thereby effectively disabling the lost or stolen CMPPT 10.

In one novel aspect, FTVE 31 uses a Global Positioning System (GPS) functionality within cellular telephone portion 10 to monitor the location of CMPPT 10. Position information can be used by an intelligent system within FTVE 31 to detect transactions that are unlike the usual transactions engaged in the actual owner of CMPPT 10. In addition, FTVE 31 may use cellular telephone portion 11 to make voice contact with customer 30 in the event of a questionable transaction so that customer 30 can verify that the transaction is not being performed by a thief or unauthorized individual. In some examples, a biometric security sensor is provided on POS sleeve portion 12 to provide some or all of the customer identification information [B]. The biometric security sensor may, for example, be a touch-strip-type fingerprint sensor as is commonly employed on laptop computers to prevent unauthorized use of the laptop. In order for an individual to use CMPPT 10, the individual is required to provide an authorized fingerprint scan at step 101 in the method of Figure 4.

Although details of various communications within one type of POS transaction are described above for illustrative purposes, usage of the CMPPT described above whereby merchant information is entered into the CMPPT at the point-of-sale has general applicability and is not limited to any one particular type of financial transaction involving particular sub-communications between the CMPT, the FTVE, and the MPT. Transaction information need not be communicated from the MPT to the FRVE, rather any necessary or desired transaction information may be communicated in whole or in part from the CMPPT to the FTVE. The transaction need not involve a verification, an authorization and an approval code. Moreover, if the transaction involves a verification, an authorization and an approval code, the verification need not be communicated from the FTVE to the MPT and the authorization need not be communicated from the MPT to the FTVE. The CMPPT can be used to carry out the authorization such that the merchant receives an approval code but the customer's user password or signature does not pass through the merchant's POS terminal. The approval code need not be communicated in a secure encrypted fashion, and the approval code need not be received into a POS sale terminal of the merchant. The approval code may, for example, be received into to an ordinary computer maintained by the merchant.

Although the use of a CMPPT to communicate customer account information to the FTVE in a secure manner without that information being communicated to the merchant is described above in connection with a credit card transaction, the use of a CMPPT to communicate customer account information is not limited to credit card transactions but rather has general applicability and applies to other types of transactions including money card (for example, smart card) transactions and debit card transactions. Although the use of a CMPPT to initiate a transaction is described above in connection with merchant account information being entered into the CMPPT at the point-of-sale, it is to be understood that any necessary merchant account information needed to initiate the transaction can be communicated from the merchant to the FTVE without such information being entered into the CMPPT. Any way of sending the required customer, merchant and transaction information to the FTVE in a secure manner and associating the information there can be employed so long as the customer account information passes directly from the CMPPT to the FTVE and does not pass to the merchant or the merchant's POS terminal. Although the cellular telephone functionality and the POS circuit functionality are embodied in different physical structures that are then fixed together as described above to form a CMPPT, the POS circuit functionality can be integrated into a cellular telephone. Accordingly, various modifications, adaptations, and combinations of various features of the described embodiments can be practiced without departing from the scope of the invention as set forth in the claims.

Features of the original disclosure are:
1. A method comprising:
   (a) storing customer account information in a customer mobile personal point-of-sale terminal (CMPPT), wherein the CMPPT includes a cellular telephone portion and a point-of-sale attachment portion;
   (b) after the storing of (a) receiving merchant account information into the CMPPT; and
   (c) initiating a transaction by sending the customer account information and the merchant account information from the CMPPT to a financial transaction verification entity (FTVE).
2. The method of point 1, wherein the point-of-sale attachment portion includes a secure memory and an anti-tamper mesh, wherein the secure memory stores at least one encryption key, and wherein said at least one encryption key is used to engage in a secure communication with the FTVE.
3. The method of point 1, wherein the transaction is taken from the group consisting of: a credit card transaction, a debit card transaction, a money card transaction, and a transaction involving a direct transfer of funds from one bank account to another bank account.
4. The method of point 1, wherein the receiving of (b) occurs at a point-of-sale, and wherein the customer account information of (a) is loaded into the CMPPT at a location other that at the point-of-sale.
5. The method of point 1, wherein the merchant account information is an account number.
6. The method of point 1, wherein the merchant account information is information that identifies an account of a merchant.
7. The method of point 1, wherein the merchant account information is information that identifies a merchant.
8. The method of point 1, further comprising:
   (d) receiving a financial transaction approval code onto the CMPPT via the cellular telephone portion of the CMPPT, wherein the approval code is an approval code for the transaction, and wherein the transaction involves a transfer of funds from a customer account indicated by the customer account information to another account.
9. The method of point 1, wherein the sending of (c) results in a communication being sent to a merchant point-of-sale terminal (MPT).
10. The method of point 1, wherein the customer account information is sent in (c) from the cellular telephone portion in encrypted form.
11. The method of point 1, wherein the transaction involves a customer and a merchant, and wherein the transaction occurs without the merchant receiving the customer account information.
12. A method comprising:
   (a) maintaining customer account information in a customer mobile personal point-of-sale terminal (CMPPT), the CMPPT including a cellular telephone portion and a point-of-sale (POS) attachment portion;
   (b) transporting the CMPPT to a point-of-sale when the customer account information is maintained in the CMPPT; and
   (c) using the CMPPT to initiate a transaction while the CMPPT is located at the point-of-sale, wherein the customer account information is communicated from the CMPPT to a financial transaction verification entity (FTVE) in a secure fashion without the customer account information being communicated to a merchant, wherein the transaction involves the merchant and a customer, and wherein the maintaining of (a), the transporting of (b) and the using of (c) are performed by the customer.
13. The method of point 12, further comprising:
   (d) receiving information about the merchant into the CMPPT at the point-of-sale, wherein the information about the merchant is used in (c) to initiate the transaction.
14. The method of point 12, wherein the point-of-sale attachment portion includes a secure memory and an anti-tamper mesh, wherein the secure memory stores at least one encryption key, and wherein said at least one encryption key is used to engage in a secure communication with the FTVE.
15. A method comprising:
   (a) receiving customer account information from a customer mobile personal point-of-sale terminal (CMPPT), wherein the CMPPT is located at a point-of-sale and is in the possession of a customer;
   (b) using the customer account information to initiate authorization of a transaction, wherein the transaction involves the customer and a merchant; and
   (c) sending information about the transaction to the merchant after the transaction has been authorized, wherein steps (a), (b) and C) are performed by a financial transaction verification entity (FTVE).
16. An apparatus, comprising:
   a cellular telephone portion; and
   a point-of-sale attachment portion that is attached to the cellular telephone portion, the point-of-sale attachment portion comprising:
      a secure memory that stores customer account information;
      a mechanism for receiving merchant account information into the point-of sale attachment portion when the secure memory is storing the customer account information; and
      secure circuitry that communicates the customer account information and the merchant account information to the cellular telephone portion in encrypted form.
17. An apparatus, comprising:
   a cellular telephone portion; and
   means, fixed to the cellular telephone portion, for receiving merchant account information when the means stores customer account information, the means also being for communicating the merchant account information and the customer account information to the cellular telephone portion in encrypted form.
18. The apparatus of point 17, wherein the means includes a secure memory that stores an encryption key, the secure memory being substantially covered by an anti-tamper mesh, wherein the means is also for using the encryption key to encrypt the merchant account information and the customer account information.
19. The apparatus of point 18, wherein the means is for receiving personal identification information from the cellular telephone portion, and wherein the means is also for checking the personal identification information to confirm that the apparatus is being used by an authorized user.

The original disclosure is summarized as follows: a customer mobile personal point-of -sale terminal (CMPPT) includes a Point-Of -Sale (POS) sleeve portion that slidingly engages, and couples to, a cellular telephone. The cellular telephone is used to communicate encrypted information between a financial transaction verification entity (FTVE) and the POS sleeve portion. The sleeve portion includes a mechanism for reading in a merchant account number at the point-of -sale, and for communicating in a secure encrypted fashion with the FTVE via the cellular telephone portion. Rather than a customer entering sensitive financial information into a merchant's POS terminal (MPT) and trusting the merchant with such information, merchant information is entered into the CMPPT. The CMPPT initiates a transaction by- sending the customer's account information and the merchant information to the FTVE. The FTVE receives information about the transaction directly from the MPT. The FTVE verifies the transaction, and after authorization, the FTVE forwards approval codes to the CMPPT and MPT.

## Claims

1. A customer mobile personal point-of-sale terminal comprising:
a cellular telephone;
a point-of-sale sleeve coupled to the cellular telephone, the point-of-sale sleeve comprising:
a magnetic stripe reader that loads a customer account number from a swiped credit card by a customer;
a secure memory that stores a cryptographic key unique to the customer;
a battery that provides power to the secure memory;
a secure POS terminal integrated circuit that is supplied with the customer account number that was loaded into the magnetic stripe reader, the secure POS terminal uses the cryptographic key to encrypt the customer account information, a merchant account number and a merchant identification information;
a connector that detachably mates with the cellular telephone;
wherein the encrypted customer account information, the encrypted merchant account information, the encrypted merchant identification information and the transaction information are transmitted to a financial transaction verification entity for approval of a transaction.

2. The customer mobile personal point-of-sale terminal of claim 1 wherein the encrypted customer account information is communicated from the point-of-sale sleeve to the cellular telephone portion.

3. The customer mobile personal point-of-sale terminal of claim 2 further comprising an anti-tamper mesh.

4. The customer mobile personal point-of-sale terminal of claim 1 wherein the financial transaction verification entity identifies an improper use of the mobile point-of-sale terminal based on the cryptographic key and/or wherein the mobile point-of-sale terminal receives an approval code from the financial transaction verification entity.

5. The customer mobile personal point-of-sale terminal of claim 1 further comprising a global position system that identifies a location of the mobile point-of-sale terminal associated with the transaction and/or wherein the location of the mobile point-of-sale terminal associated with the transaction is transmitted to the financial transaction verification entity.

6. The customer mobile personal point-of-sale terminal of claim 1 wherein the merchant information comprises account information for receiving funds associated with the transaction.

7. The customer mobile personal point-of-sale terminal of claim 1 wherein the connector makes physical, electrical contact with the mobile device.

8. The customer mobile personal point-of-sale terminal of claim 1 wherein an output of the point-of-sale sleeve wirelessly engages with the mobile device.

9. A method for communicating encrypted transaction information between a customer mobile personal point-of-sale terminal and a financial transaction verification entity, the method comprising:
loading a customer account information using a magnetic stripe reader within a point-of-sale sleeve attached to a cellular phone;
encrypting the customer account information using a cryptographic key unique to a customer involved in a transaction;
storing the encrypted customer account information in a memory within the point-of-sale sleeve;
associating the encrypted customer account information with merchant information including a merchant account information and merchant identification information;
transmitting the encrypted customer account information and merchant information to the cellular phone via a connector; and
transmitting the encrypted customer account information and encrypted merchant information related to the transaction from the cellular phone to the financial transaction verification entity.

10. The method of claim 9 wherein transaction information is transmitted to the financial transaction verification entity and/or comprising the step of receiving an approval code from the financial transaction verification entity.

11. The method of claim 10 further comprising the steps of:
associating a unique identification number, preferably a serial number associated with the cellular phone, with the information related to the transaction, the unique identification number uniquely identifies the mobile point of sale device to the financial transaction verification entity; and
transmitting the unique identification number to the financial transaction verification entity with the information related to the transaction.

12. The method of claim 11 wherein cellular phone is an iPhone comprising a native application downloaded from an application store.

13. The method of claim 9 further comprising the step of:
providing power to the memory using a battery, the battery being located within the point-of-sale sleeve; and
wherein the battery is used to power detection of a tamper event.

14. The method of claim 13 wherein the mobile point of sale terminal comprises a biometric sensor that authorizes a user to the mobile point of sale terminal.

15. The method of claim 9 further comprising the step of monitoring a location of the customer mobile personal point-of-sale terminal using a global positioning system and/or wherein the location is transmitted to the financial transaction verification entity.
